# EUROPÄISCHE PATENTANMELDUNG

(11) **EP 3 572 988 A1**
(43) Veröffentlichungstag der Anmeldung: **27.11.2019**
(21) Anmeldenummer: 18174085.3
(22) Anmeldetag: 24.05.2018
(51) Int. Cl.: G06Q 10/00

(54) **SPEICHERN VON INFORMATIONEN ÜBER BAUTEILE ZUM ZWECK DER DEMONTAGE**

(71) Anmelder: Siemens Aktiengesellschaft, 80333 München (DE)
(72) Erfinder: Matschnig, Martin, 3430 Tulln (AT); Hinterstoisser, Thomas, 2102 Bisamberg (AT); Taucher, Herbert, 1190 Wien (AT)
(74) Vertreter: Maier, Daniel Oliver

(57) **Zusammenfassung**

Die Erfindung betrifft ein Verfahren zum Speichern von Informationen über Bauteile, wobei die Bauteile in einer Einheit enthalten sind, unter Verwendung eines nicht flüchtigen Speichers an oder in der Einheit, zum Zweck der späteren Demontage der Bauteile von der Einheit. Dabei ist vorgesehen, dass entweder im nicht flüchtigen Speicher eine Information zur Demontage zumindest eines Bauteils von der restlichen Einheit abgelegt wird, oder dass im nicht flüchtigen Speicher ein Verweis abgelegt wird, an welchem Ort außerhalb der Einheit eine Information zur Demontage zumindest eines Bauteils von der restlichen Einheit gespeichert ist und die Information zur Demontage zumindest eines Bauteils an diesem Ort abgespeichert wird.

## Beschreibung

### GEBIET DER ERFINDUNG

Die Erfindung betrifft ein Verfahren zum Speichern von Informationen über Bauteile, wobei die Bauteile in einer Einheit enthalten sind, unter Verwendung eines nicht flüchtigen Speichers an oder in der Einheit, zum Zweck der späteren Demontage der Bauteile von der Einheit.

Die Bauteile sind Teil der Einheit. Die Einheit kann z.B. eine Leiterplatte sein, die mit einem oder mehreren elektronischen Bauteilen bestückt ist. An oder in der Einheit kann heißen, dass der nicht flüchtige Speicher außen an der Oberfläche einer Einheit, z.B. auf einer Leiterplatte, oder im Inneren der Einheit, z.B. innerhalb der Leiterplatte, angeordnet ist. An oder in der Einheit kann auch heißen, dass der nicht flüchtige Speicher außen an einem Bauteil angeordnet oder im Inneren des Bauteils vorgesehen ist.

### STAND DER TECHNIK

Im Bereich der Abfallverwertung besteht speziell beim Recycling von Elektroschrott noch immer Bedarf an einer Verbesserung der Automatisierung bei der Demontage des Elektroschrotts. Mit Elektroschrott meint man Einheiten, die elektronische Bauteile enthalten, wobei diese Einheiten nicht mehr verwendet werden, sondern entsorgt werden sollen, sei es, weil die Einheiten nicht mehr funktionsfähig sind oder weil diese durch neue Einheiten ersetzt werden. Solche Einheiten sind z.B. Leiterplatten (Platinen), die mit elektronischen Bauteilen bestückt sind. Durch die immens große Vielfalt elektronischer Abfälle ist eine vollständig automatisierte Verwertung nur eingeschränkt möglich. In der Regel sind immer noch manuelle Tätigkeiten nötig.

Für Elektronikschrott in Form von mit elektronischen Bauteilen bestückten Leiterplatten sind bereits eine Reihe von Verfahren zur Wiederverwertung vorgeschlagen worden. Zumeist werden die elektronischen Bauteile geschreddert und mittels Magneten die eisenhaltigen Partikel extrahiert.
Danach wird das Schreddergut, z.B. mit Hilfe von Rütteltischen, in verschiedene Korngrößen getrennt und ausgeschleust. Die Fragmente können dann eingeschmolzen werden. Dabei erfolgt aber keine individuelle Behandlung der elektronischen Bauteile, sondern bestenfalls eine vorherige grobe Vorsortierung durch visuelle Inspektion mittels Kamerasystemen und Bilderkennung.

Es gibt auch Lösungen, die den Sortiervorgang durch verschiedene Arten der Kennzeichnung von zu sortierenden Teilen ermöglichen. So können etwa Kunststoffflaschen mit einem Strichcode versehen sein, der optisch erkannt werden kann und eine Information enthält, aus welchem Kunststoff die Flasche besteht. Es gibt auch Verwertungssysteme für Abfall, bei denen RFID Tags oder NFC Tags verwendet werden, um Teile zu kennzeichnen. Diese Kennzeichnung alleine wird aber komplexeren Einheiten nicht gerecht, die über einen oder mehrere Bauteile verfügen, bei denen jeder mit der restlichen Einheit auf bestimmte Art verbunden, z.B. aufgelötet ist. Denn die Kennzeichnung liefert nur eine Information, um welchen Bauteil es sich handelt, aber nicht, wie dieser von der restlichen Einheit getrennt werden kann.

Es gibt auch Forschungsansätze, um Erkenntnisse im Bereich der Künstlichen Intelligenz und des sogenannten Machine Learning im Bereich der Abfallverwertung einzusetzen. Damit könnte es in Zukunft möglich sein, selbstlernende Roboter für die Abfallverwertung zu bauen. Eine flächendeckend einsetzbare Lösung ist auf dieser Basis mittelfristig aber nicht zu erwarten.

### DARSTELLUNG DER ERFINDUNG

Es ist daher eine Aufgabe der Erfindung, unter Verwendung von bereits bestehenden Mitteln ein Verfahren zu schaffen, mit dem Bauteile, die in größeren Einheiten enthalten sind, so gekennzeichnet werden können, dass die Bauteile später bei der Abfallverwertung entsprechend dieser Kennzeichnung demontiert werden können.

Diese Aufgabe wird durch ein Verfahren nach Anspruch 1 gelöst. Anspruch 1 bezieht sich auf ein Verfahren zum Speichern von Informationen über Bauteile, wobei die Bauteile in einer Einheit enthalten sind, unter Verwendung eines nicht flüchtigen Speichers an oder in der Einheit, zum Zweck der späteren Demontage der Bauteile von der Einheit. Anspruch 1 löst die gestellte Aufgabe, indem entweder im nicht flüchtigen Speicher eine Information zur Demontage zumindest eines Bauteils von der restlichen Einheit abgelegt wird, oder dass im nicht flüchtigen Speicher ein Verweis abgelegt wird, an welchem Ort außerhalb der Einheit eine Information zur Demontage zumindest eines Bauteils von der restlichen Einheit gespeichert ist und die Information zur Demontage zumindest eines Bauteils an diesem Ort abgespeichert wird.

Die Information zur Demontage wird also, mithilfe eines nicht flüchtigen Speichers, entweder direkt auf der Einheit oder an einem Bauteil hinterlegt, oder es wird auf der Einheit oder an einem Bauteil nur ein Hinweis hinterlegt, wo diese Information zu finden ist. Diese Information kann dann bei der Demontage durch Abfrage des nicht flüchtigen Speichers erhalten werden.

Im Fall, dass auf dem nicht flüchtigen Speicher nur ein Verweis abgelegt ist, etwa weil der Speicher nicht genug Speicherplatz für die Informationen zur Demontage aufweist, kann die Information zur Demontage zumindest eines Bauteils in einer externen Datenbank oder eine sogenannten Cloud abgelegt sein. Der Verweis enthält dann etwa einen eindeutigen Identifier, über den der richtige Datensatz gefunden werden kann.

Der nicht flüchtige Speicher kann einem einzigen Bauteil oder mehreren Bauteilen zugeordnet sein. Mit anderen Worten kann der nicht flüchtige Speicher Information zur Demontage enthalten, die nur einen Bauteil betrifft, oder er kann Information zur Demontage für mehrere Bauteile der Einheit umfassen. Falls nur ein Verweis im nicht flüchtigen Speicher abgelegt wird, kann an dem Ort außerhalb der Einheit Information zur Demontage nur eines Bauteils oder Information zur Demontage für mehrere Bauteile abgelegt werden.

Der nicht flüchtige Speicher, oder der Speicherort auf den der nicht flüchtige Speicher verweist, kann zusätzlich zur Information zur Demontage auch Informationen darüber enthalten, ob Teile der Einheit, insbesondere die Bauteile, Gefahrenstoffe und/oder wiederverwertbare Inhalte enthalten.

In einer Ausführungsform der Erfindung ist vorgesehen, dass die Information zur Demontage zumindest eines Bauteils von der restlichen Einheit, oder der Verweis darauf, auf dem flüchtigen Speicher verschlüsselt abgelegt wird. Damit ist es möglich, dass die Information zur Demontage nur autorisierten Verwertungsunternehmen zugänglich zu machen, welche etwa über notwendige Kenntnisse verfügen oder bestimmte Vorschriften einhalten bzw. über entsprechende Zertifikate verfügten.

Das erfindungsgemäße Verfahren kann vorteilhaft zum Sortieren von Elektroschrott verwendet werden. Insofern kann vorgesehen sein, dass es sich bei den Bauteilen um elektronische Bauteile handelt.

Gemäß einer Ausführungsform der Erfindung ist die Information zur Demontage zumindest eines Bauteils eine schrittweise Anleitung zur Demontage. Die Information zur Demontage kann also Anweisungen mit mehreren Schritten umfassen, die bei der Demontage nacheinander auszuführen sind.

Insbesondere kann vorgesehen sein, dass die Information zur Demontage aus der Anleitung zur schrittweisen Montage des Bauteils an der Einheit erstellt wird, indem die Ausführung der Montageschritte in umgekehrter Reihenfolge angegeben wird.

Es kann vorgesehen sein, dass die Information zur Demontage beim Erstellen der Information zur Montage des Bauteils an der Einheit erstellt wird. Eine Zerlegeanleitung kann also gemeinsam mit den Fertigungsunterlagen erstellt werden, weil zu diesem Zeitpunkt alle nötigen Informationen vorhanden sind und die Zerlegeanleitung weitgehend automatisiert aus den Fertigungsunterlagen abgeleitet werden kann.

Eine andere Ausführungsform besteht darin, dass bei der - meist automatisch und maschinell durchgeführten - Montage des Bauteils an der Einheit die Anweisungen dafür - ebenfalls automatisiert - abgespeichert werden und, in umgekehrter Reihenfolge ausgeführt, die später notwendigen Schritte für die Demontage ergeben.

Eine Ausführungsform der Erfindung sieht vor, dass die Information zur Demontage zumindest eines Bauteils eine Information über enthaltene gefährliche Stoffe umfasst. Es können also zusätzlich Informationen abgespeichert werden, die angeben, ob ein bestimmter Bauteil gefährliche Stoffe umfasst, wie gefährliche Rohstoffe oder Bestandteile aus gefährlichen Verbindungen. Bei der Demontage kann dann entschieden werden, ob dieser Bauteil demontiert wird oder die gesamte Einheit ohne Demontage dieses Bauteils anderweitig entsorgt wird, z.B. in einer Sondermüllverbrennung. Gefährliche Stoffe können sein: Quecksilber (aus quecksilberhaltigen Bauteilen), oder Blei (aus Lötverbindungen).

Eine Ausführungsform der Erfindung sieht vor, dass der nicht flüchtige Speicher an oder in der Einheit über eine passive NFC-Schnittstelle verfügt. Das bedeutet, dass zum Auslesen der Informationen des flüchtigen Speichers keine Energiequelle auf der Einheit notwendig ist.

Denkbar wäre es auch, dass im Falle des Verweises der nicht flüchtige Speicher als QR-Code auf einem Träger, z.B. auf einem Aufkleber, ausgebildet ist.

Die Erfindung umfasst auch ein Verfahren zum Demontieren von Bauteilen, die in einer Einheit enthalten sind, unter Verwendung eines nicht flüchtigen Speichers an oder in der Einheit. Damit können Bauteile automatisiert von Einheiten demontiert werden, welche Einheiten (bzw. deren nicht flüchtige Speicher) zuvor mit dem erfindungsgemäßen Verfahren zum Speichern von Informationen über Bauteile bearbeitet worden sind.

Das Verfahren zum Demontieren umfasst die Schritte, dass entweder eine Information zur Demontage zumindest eines Bauteils aus dem nicht flüchtigen Speicher automatisiert ausgelesen wird, oder dass aus dem nicht flüchtigen Speicher automatisiert ein Verweis ausgelesen wird, an welchem Ort außerhalb der Einheit eine Information zur Demontage zumindest eines Bauteils von der restlichen Einheit gespeichert ist und die Information zur Demontage zumindest eines Bauteils von diesem Ort automatisiert ausgelesen wird, und dass die Demontage zumindest eines Bauteils anhand dieser Information zur Demontage automatisiert durchgeführt wird.

Automatisiert bedeutet, dass eine Maschine (ein Automat) vorbestimmte Abläufe selbsttätig ausführt. Die Maschine wird also, mittels elektronischer Datenverarbeitung, die Information zur Demontage einlesen und anschließend die Demontage durchführen.

Mit Hilfe einer detaillierten Zerlegeanleitung können geeignete Zerlegeroboter die Bauteile fachgerecht demontieren, welche anschließend einem passenden Recyclingprozess zugeführt werden können.

Entsprechend dem erfindungsgemäßen Verfahren zum Speichern von Informationen über Bauteile umfasst die Erfindung auch eine Einheit enthaltend zumindest einen, insbesondere elektronischen, Bauteil und einen nicht flüchtigen Speicher an oder in der Einheit, wobei im nicht flüchtigen Speicher entweder eine Information zur Demontage zumindest eines Bauteils von der restlichen Einheit abgelegt ist, oder wobei im nicht flüchtigen Speicher ein Verweis abgelegt ist, an welchem Ort außerhalb der Einheit die Information zur Demontage zumindest eines Bauteils von der restlichen Einheit gespeichert ist.

Diese Einheit ist insbesondere gemäß dem erfindungsgemäßen Verfahren zum Speichern von Informationen über Bauteile hergestellt. Die Information zur Demontage zumindest eines Bauteils von der restlichen Einheit, oder der Verweis darauf, kann auf dem nicht flüchtigen Speicher verschlüsselt abgelegt sein. Wie bereits erläutert, kann die Information zur Demontage zumindest eines Bauteils eine schrittweise Anleitung zur Demontage sein. Der nicht flüchtige Speicher an oder in der Einheit kann über eine passive NFC-Schnittstelle verfügen.

Als nicht flüchtiger Speicher kann beispielsweise ein sogenannter Flash-Speicher (Flash-EEPROM) verwendet werden, z.B. Flash-Speicher mit NFC-Schnittstelle.

Die Erfindung betrifft auch ein Computerprogrammprodukt, welches ein Programm umfasst und direkt in einen Speicher eines Rechners ladbar ist, mit Programm-Mitteln, um alle Schritte des erfindungsgemäßen Verfahrens zum Speichern von Informationen über Bauteile und/oder des erfindungsgemäßen Verfahrens zum Demontieren von Bauteilen zu veranlassen, wenn das Programm vom Rechner ausgeführt wird.

Das Computerprogrammprodukt kann in einer Fertigungsanlage für das Montieren (Assemblieren) von Bauteilen an Einheiten verwendet werden, ein Rechner der Fertigungsanlage veranlasst dann, entsprechend einem der Ansprüche 1 bis 7, zumindest, dass entweder im nicht flüchtigen Speicher eine Information zur Demontage zumindest eines Bauteils von der restlichen Einheit abgelegt wird, oder dass im nicht flüchtigen Speicher ein Verweis abgelegt wird, an welchem Ort außerhalb der Einheit eine Information zur Demontage zumindest eines Bauteils von der restlichen Einheit gespeichert ist und die Information zur Demontage zumindest eines Bauteils an diesem Ort abgespeichert wird.

Das Computerprogrammprodukt kann in einer Recyclinganlage verwendet werden, ein Rechner der Recyclinganlage veranlasst dann, entsprechend Anspruch 8,
dass entweder eine Information zur Demontage zumindest eines Bauteils aus dem nicht flüchtigen Speicher automatisiert ausgelesen wird, oder dass aus dem nicht flüchtigen Speicher automatisiert ein Verweis ausgelesen wird, an welchem Ort außerhalb der Einheit eine Information zur Demontage zumindest eines Bauteils von der restlichen Einheit gespeichert ist und die Information zur Demontage zumindest eines Bauteils von diesem Ort automatisiert ausgelesen wird, und
dass die Demontage zumindest eines Bauteils anhand dieser Information zur Demontage automatisiert durchgeführt wird.

### WEGE ZUR AUSFÜHRUNG DER ERFINDUNG

Bei der Montage von Bauteilen an einer Einheit, etwa von elektronischen Bauteilen an einer Leiterplatte, werden einem Bestückungsautomaten die Schritte und deren Reihenfolge für die Montage der einzelnen Bauteile von einem Rechner vorgegeben. Diese Schritte können z.B. vereinfacht lauten: "Löte zuerst Bauteil A an der Leiterplatte an, dann Bauteil B". Dieser Rechner stellt auch sicher, dass entweder im einem nicht flüchtigen Speicher der Einheit eine Information zur Demontage zumindest eines Bauteils von der restlichen Einheit abgelegt wird, oder dass im nicht flüchtigen Speicher ein Verweis abgelegt wird, an welchem Ort außerhalb der Einheit eine Information zur Demontage zumindest eines Bauteils von der restlichen Einheit gespeichert ist und die Information zur Demontage zumindest eines Bauteils an diesem Ort abgespeichert wird. Diese Information zur Demontage könnte z.B. vereinfacht lauten "Entferne zuerst Bauteil B, dann Bauteil A durch Lösen der Lötverbindung".

Dabei entstehen Einheiten, z.B. Leiterplatten, bei denen im nicht flüchtigen Speicher entweder eine Information zur Demontage zumindest eines Bauteils von der restlichen Einheit abgelegt ist, oder bei denen im nicht flüchtigen Speicher ein Verweis abgelegt ist, an welchem Ort außerhalb der Einheit die Information zur Demontage zumindest eines Bauteils von der restlichen Einheit gespeichert ist.

Werden die Einheiten später recycelt, kann ein Rechner der Recyclinganlage veranlassen, dass entweder die Information zur Demontage zumindest eines Bauteils aus dem nicht flüchtigen Speicher ausgelesen wird, oder dass aus dem nicht flüchtigen Speicher automatisiert ein Verweis ausgelesen wird, an welchem Ort außerhalb der Einheit eine Information zur Demontage zumindest eines Bauteils von der restlichen Einheit gespeichert ist und die Information zur Demontage zumindest eines Bauteils von diesem Ort automatisiert ausgelesen wird. Anschließend veranlasst der Rechner der Recyclinganlage, dass die Demontage zumindest eines Bauteils anhand dieser Information zur Demontage automatisiert durchgeführt wird. Der Rechner der Recyclinganlage könnte also einem entsprechenden Roboter der Recyclinganlage folgenden Befehl erteilen: "Entferne zuerst Bauteil B, dann Bauteil A durch Lösen der Lötverbindung".

## Patentansprüche

1. Verfahren zum Speichern von Informationen über Bauteile, wobei die Bauteile in einer Einheit enthalten sind, unter Verwendung eines nicht flüchtigen Speichers an oder in der Einheit, zum Zweck der späteren Demontage der Bauteile von der Einheit, **dadurch gekennzeichnet, dass** entweder im nicht flüchtigen Speicher eine Information zur Demontage zumindest eines Bauteils von der restlichen Einheit abgelegt wird, oder dass im nicht flüchtigen Speicher ein Verweis abgelegt wird, an welchem Ort außerhalb der Einheit eine Information zur Demontage zumindest eines Bauteils von der restlichen Einheit gespeichert ist und die Information zur Demontage zumindest eines Bauteils an diesem Ort abgespeichert wird.

2. Verfahren nach Anspruch 1, **dadurch gekennzeichnet, dass** die Information zur Demontage zumindest eines Bauteils von der restlichen Einheit, oder der Verweis darauf, auf dem flüchtigen Speicher verschlüsselt abgelegt wird.

3. Verfahren nach Anspruch 1 oder 2, **dadurch gekennzeichnet, dass** es sich bei den Bauteilen um elektronische Bauteile handelt.

4. Verfahren nach einem der vorhergehenden Ansprüche, **dadurch gekennzeichnet, dass** die Information zur Demontage zumindest eines Bauteils eine schrittweise Anleitung zur Demontage ist.

5. Verfahren nach Anspruch 4, **dadurch gekennzeichnet, dass** die Information zur Demontage aus der Anleitung zur schrittweisen Montage des Bauteils an der Einheit erstellt wird, indem die Ausführung der Montageschritte in umgekehrter Reihenfolge angegeben wird.

6. Verfahren nach einem der vorhergehenden Ansprüche, **dadurch gekennzeichnet, dass** die Information zur Demontage beim Erstellen der Information zur Montage des Bauteils an der Einheit erstellt wird.

7. Verfahren nach einem der vorhergehenden Ansprüche, **dadurch gekennzeichnet, dass** die Information zur Demontage zumindest eines Bauteils eine Information über enthaltene gefährliche Stoffe umfasst.

8. Verfahren nach einem der vorhergehenden Ansprüche, **dadurch gekennzeichnet, dass** der nicht flüchtige Speicher an oder in der Einheit über eine passive NFC-Schnittstelle verfügt.

9. Verfahren zum Demontieren von Bauteilen, die in einer Einheit enthalten sind, unter Verwendung eines nicht flüchtigen Speichers an oder in der Einheit, **dadurch gekennzeichnet,**
**dass** entweder eine Information zur Demontage zumindest eines Bauteils aus dem nicht flüchtigen Speicher automatisiert ausgelesen wird, oder dass aus dem nicht flüchtigen Speicher automatisiert ein Verweis ausgelesen wird, an welchem Ort außerhalb der Einheit eine Information zur Demontage zumindest eines Bauteils von der restlichen Einheit gespeichert ist und die Information zur Demontage zumindest eines Bauteils von diesem Ort automatisiert ausgelesen wird, und
**dass** die Demontage zumindest eines Bauteils anhand dieser Information zur Demontage automatisiert durchgeführt wird.

10. Einheit, insbesondere hergestellt nach einem der Ansprüche 1 bis 8, enthaltend zumindest einen Bauteil und einen nicht flüchtigen Speicher an oder in der Einheit, **dadurch gekennzeichnet, dass** im nicht flüchtigen Speicher entweder eine Information zur Demontage zumindest eines Bauteils von der restlichen Einheit abgelegt ist, oder dass im nicht flüchtigen Speicher ein Verweis abgelegt ist, an welchem Ort außerhalb der Einheit die Information zur Demontage zumindest eines Bauteils von der restlichen Einheit gespeichert ist.

11. Einheit nach Anspruch 10, **dadurch gekennzeichnet, dass** die Information zur Demontage zumindest eines Bauteils von der restlichen Einheit, oder der Verweis darauf, auf dem flüchtigen Speicher verschlüsselt abgelegt ist.

12. Einheit nach Anspruch 10 oder 11, **dadurch gekennzeichnet, dass** es sich bei dem Bauteil um elektronische Bauteile handelt.

13. Einheit nach einem der Ansprüche 10 bis 12, **dadurch gekennzeichnet, dass** die Information zur Demontage zumindest eines Bauteils eine schrittweise Anleitung zur Demontage ist.

14. Einheit nach einem der Ansprüche 10 bis 13, **dadurch gekennzeichnet, dass** der nicht flüchtige Speicher an oder in der Einheit über eine passive NFC-Schnittstelle verfügt.

15. Computerprogrammprodukt, welches ein Programm umfasst und direkt in einen Speicher eines Rechners ladbar ist, mit Programm-Mitteln, um alle Schritte des Verfahrens nach einem der Ansprüche 1 bis 9 zu veranlassen, wenn das Programm vom Rechner ausgeführt wird.
